# EUROPEAN PATENT APPLICATION

(11) **EP 4 789 546 A1**
(43) Date of publication of application: **12.08.2026**
(21) Application number: 24874467.4
(22) Date of filing: 18.09.2024
(51) Int. Cl.: A23G 1/00, A23D 7/005, A23G 1/34

(54) **OILY FOOD AND CACAO SUBSTITUTE**

(30) Priority: 02.10.2023 JP 2023171052
(71) Applicant: Fuji Oil Company, Limited, Izumisano-shi Osaka 598-8540 (JP)
(72) Inventor: SUGIYAMA, Masahiro, Tsukubamirai-shi, Ibaraki 300-2436 (JP); MIYAZAKI, Chiaki, Tsukubamirai-shi, Ibaraki 300-2436 (JP)
(74) Representative: Boult Wade Tennant LLP
(86) International application number: PCT/JP2024/033170
(87) International publication number: WO 2025/074858

(57) **Abstract**

To provide a cocoa substitute that can be used as a substitute for components derived from cacao, and to provide a novel oil-based food having a good flavor even when the amount of components derived from cacao is reduced. A cocoa substitute satisfying all of the following requirements (1) to (5): (1) the cocoa substitute includes at least one legume as a raw material; (2) the cocoa substitute is a roasted product containing a ground material of the legume; (3) the cocoa substitute contains 0.5 mg/g or more and 3.8 mg/g or less of free amino acids in nonfat solids; (4) the free amino acids contained in the nonfat solids satisfy all of the following proportions: (4-1) the total proportion of isoleucine and leucine is 1 mass% or more and 20 mass% or less in the free amino acids; (4-2) the total proportion of glutamine and glutamic acid is 3 mass% or more and 30 mass% or less in the free amino acids; and (4-3) the proportion of lysine is 1.5 mass% or more and 10 mass% or less in the free amino acids; and (5) the oil content is from 3 mass% to 30 mass%.

## Description

### Technical Field

### Related Art

The present application claims the benefit of priority from Japanese Patent Application No. 2023-171052 filed with Japan Patent Office on October, 2, 2023. The priority application is incorporated herein by reference in its entirety.

The present invention relates to an oil-based food and a cocoa substitute.

### Background Art

Chocolates prepared by blending components derived from cacao, such as cocoa mass, cocoa butter, and cocoa powder, are favored for their unique flavor and texture, and are consumed worldwide. However, areas and environments where cacao can be harvested are limited, and chocolate produced using cacao-derived raw materials as main raw materials is expensive. Therefore, technological development is taking place to substitute cacao-derived raw materials with other raw materials.

Studies are being conducted to obtain an alternative material for cocoa butter, which is one of the components derived from cacao, by fractionation or interesterification of palm oil or the like, and such an alternative material is now available at a lower cost than cocoa butter.

Patent Document 1 discloses a technique of baking defatted malt together with a reducing sugar in the presence of steam to obtain a cocoa powder substitute. Patent Document 2 discloses a taste-improving agent produced by enzymolysis of an extract liquid of roasted grain and adding sugars. Patent Document 3 discloses a chocolate-like food containing, as a main component, a soybean protein extraction residue used as a cocoa powder substitute.

Non-Patent Literature 1 discloses carob as a substitute for cacao raw material.

### Citation List

### Patent Document

| | |
|---|---|
| Patent Document 1: | JP S55-054857 A |
| Patent Document 2: | JP 2013-252113 A |
| Patent Document 3: | JP 2015-027280 A |

Non-Patent Literature 1: Lanfranchi et al., Quality-Access to Success, Vol. 20, No. 168 (2019) 148-153

### Summary of Invention

### Technical Problem

In Patent Documents 1 to 3, heated product of a grain, such as barley, or soybean protein extraction residue, is used as a cocoa substitute or a taste-improving agent. However, an off-taste, such as a grain odor, has been perceived, and this has been insufficient in terms of the flavor.

In addition, the material described in Non-Patent Literature 1 has been insufficient, since it has exhibited an off-taste or insufficient flavor.

Accordingly, an object of the present invention is to provide a cocoa substitute that can be used as a substitute for components derived from cacao, and to provide a novel oil-based food having a good flavor even when the amount of components derived from cacao is reduced.

### Solution to Problem

As a result of intensive studies conducted to address the above problems, the present inventors have found that a roasted product containing a ground material of a legume, which satisfies contents and compositional ratios of specific free amino acids and contains a specific amount of oil, can be used as a favorable cocoa substitute. Furthermore, the present inventors have found that an oil-based food including a roasted product containing a ground material of a legume and satisfying contents and compositional ratios of specific free amino acids has a good flavor, and thus have completed the present invention.

That is, the present invention provides:
[1] A cocoa substitute satisfying all of the following requirements (1) to (5):
   (1) the cocoa substitute includes at least one legume as a raw material;
   (2) the cocoa substitute is a roasted product containing a ground material of the legume;
   (3) the cocoa substitute includes 0.5 mg/g or more and 3.8 mg/g or less of free amino acids in nonfat solids;
   (4) the free amino acids contained in the nonfat solids satisfy all of the following proportions:
      (4-1) a total proportion of isoleucine and leucine is 1 mass% or more and 20 mass% or less in the free amino acids;
      (4-2) a total proportion of glutamine and glutamic acid is 3 mass% or more and 30 mass% or less in the free amino acids; and
      (4-3) a proportion of lysine is 1.5 mass% or more and 10 mass% or less in the free amino acids; and
   (5) an oil content is 3 mass% or more and 30 mass% or less.
[2] The cocoa substitute according to [1], wherein the ground material of the legume is a ground material of one or more legumes selected from soybeans, mung beans, fava beans, common beans, peas, scarlet runner beans, adzuki beans, and chickpeas.
[3] An oil-based food including 5 mass% or more of the cocoa substitute according to [1] or [2].
[4] An oil-based food satisfying all of the following requirements (A) to (D):
   (A) the oil-based food includes at least one legume as a raw material;
   (B) the oil-based food includes a roasted product containing a ground material of the legume;
   (C) the oil-based food includes 0.3 mg/g or more and 2.1 mg/g or less of free amino acids in nonfat solids; and
   (D) the free amino acids contained in the nonfat solids of the oil-based food satisfy all of the following proportions:
      (D-1) a total proportion of isoleucine and leucine is 0.9 mass% or more and 20 mass% or less in the free amino acids;
      (D-2) a total proportion of glutamine and glutamic acid is 3 mass% or more and 35 mass% or less in the free amino acids;
      (D-3) a proportion of lysine is 1.5 mass% or more and 10 mass% or less in the free amino acids; and
      (D-4) a proportion of alanine is 1.6 mass% or more and 10 mass% or less in the free amino acids.
[5] The oil-based food according to [4], wherein the ground material of the legume is a ground material of one or more legumes selected from soybeans, mung beans, fava beans, common beans, peas, scarlet runner beans, adzuki beans, and chickpeas.
[6] The oil-based food according to [4] or [5], wherein a content of a cacao raw material is 5 mass% or less.
[7] A method for producing a cocoa substitute, the method including all of the following steps 1 to 3:
   step 1: subjecting a ground material of a legume to protease treatment and/or wetting treatment at 20°C or higher;
   step 2: mixing the treated product obtained in step 1 with sugar, water, and an oil and/or fat component; and
   step 3: roasting the mixture obtained in step 2.
[8] A method for producing an oil-based food using the cocoa substitute according to [7], the method further including the following step 4:
   step 4: mixing and refining the cocoa substitute, sugar, and melted oil and/or fat.

### Advantageous Effects of Invention

The present invention can provide a cocoa substitute that can be used as a substitute for components derived from cacao, and a novel oil-based food having a good flavor even when the amount of components derived from cacao is reduced.

### Description of Embodiments

The cocoa substitute of the present invention refers to a food product that can be substituted for cocoa mass or cocoa powder, which are raw materials derived from cacao. The cocoa substitute of the present invention is a roasted product containing at least one legume as a raw material and containing a ground material of the legume.

By blending the cocoa substitute of the present invention in an oil-based food, an oil-based food having a good flavor can be prepared even when the amount of components derived from cacao is reduced. In particular, an oil-based food having a rich, chocolate-like flavor and aroma perceived when cacao raw materials are blended can be prepared.

In the present invention, the term "legumes" refers to materials derived from the whole and/or a part of legume seeds. The terms "ground material of legumes" and "ground legumes" refer to materials obtained by grinding such legumes.

In the present invention, the term "legumes" refers to legumes derived from plants belonging to the family Fabaceae, including the subfamily Faboideae. Specific examples include soybeans, mung beans, fava beans, common beans, peas, scarlet runner beans, adzuki beans, and chickpeas.

The legume is preferably soybeans, mung beans, fava beans, common beans, peas, scarlet runner beans, and adzuki beans; more preferably soybeans, mung beans, common beans, peas, and scarlet runner beans; even more preferably mung beans, common beans, peas, and scarlet runner beans, and most preferably common beans, peas, and scarlet runner beans.

These legumes are preferred in that a flavor suitable for oil-based foods can be obtained.

Chocolates, as one type of oil-based food, generally contain large amounts of cocoa mass or cocoa powder, which are cacao-derived raw materials. Cocoa mass and cocoa powder are produced by processing cocoa beans by roasting and the like. However, cacao is a plant belonging to the family Malvaceae, and cocoa beans and cacao-derived raw materials are excluded from legumes.

The ground material of legumes may be obtained by grinding legumes using a crusher such as a mill or a grinder, or a commercially available product prepared by grinding legumes may be purchased and used.

An example of the ground material is a powder. When preparing oil-based foods, powdery materials are easy to mix and are suitable for use.

In the present invention, the term "roasted product" refers to a product obtained by adding a mixture of raw materials such as sugars and water to a ground material of legumes, followed by stirring and roasting the mixture. The use of the roasted product provides oil-based foods having a good flavor. The roasted product may be appropriately adjusted based on the quality of the oil-based foods. Preferably, roasting conditions can be set based on the color and flavor of the roasted product.

In the present invention, the roasted product has an oil content of 3 mass% or more and 30 mass% or less. The lower limit of the oil content is preferably 3.2 mass%, more preferably 3.3 mass% or 3.4 mass%, and even more preferably 3.5 mass% or 3.6 mass%. The upper limit of the oil content is preferably 27 mass%, more preferably 25 mass%, and even more preferably 23 mass%.

Preferably, the oil content of the roasted product includes oil and/or fat components newly added in addition to oil components originally contained in the ground material of legumes. Preferably, an oil and/or fat component is added to the ground material of legumes before or during roasting. By newly adding an oil and/or fat component to the ground material of legumes and roasting the mixture, richness is imparted to the flavor of the roasted product, resulting in an intense, cacao-like flavor and aroma. Accordingly, the roasted product can be used as a cocoa substitute.

The oil and/or fat component to be added is not particularly limited, and various edible oils and/or fats can be used. More preferably, as the oil and/or fat component, vegetable oils and/or fats such as phospholipids, corn oil, palm oil, palm kernel oil, soybean oil, and sunflower seed oil may be used.

The amount of the oil and/or fat component to be added is preferably 1 g to 10 g based on 100 g of the ground material of legumes. The amount is more preferably from 1.5 g to 8 g, and even more preferably from 1.8 g to 6 g.

The oil content of the roasted product can be measured by a chloroform-methanol mixed solvent extraction method or a similar method. An example is an extraction method using SpeedExtractor E-816 (available from Nihon Buchi K. K.).

In the present invention, the roasted product has a moisture content of 5 mass% or less. This is because most of the moisture added before or during roasting of ground legume evaporates.

The moisture content of the roasted product can be measured by an analysis method such as a heat drying method.

The moisture content of the roasted product is preferably 4 mass% or less, more preferably 3 mass% or less, 2 mass% or less, and even more preferably 1 mass% or less.

In the present invention, the roasted product can be used as a cocoa substitute. For example, the roasted product as the cocoa substitute of the present invention can replace part or all of cocoa powder. In a specific embodiment, from 1 to 100 mass%, for example, from 10 to 98 mass%, from 20 to 95 mass%, from 30 to 90 mass%, from 40 to 85 mass%, or from 50 to 80 mass% of cocoa powder in food raw materials can be replaced by an equivalent amount of the cocoa substitute of the present invention. The roasted product or a mixture of the roasted product and cocoa powder serving as the cocoa substitute can be used as a raw material for oil-based foods, beverages such as chocolate beverages and cocoa beverages, powdered beverages, confectioneries, baked confectioneries, and the like in the same manner as cocoa powder.

In the present invention, the roasted product can be blended into an oil-based food as a cocoa substitute. When used as a cocoa substitute, the roasted product is preferably blended into an oil-based food in an amount of 5 mass% or more, more preferably 7 mass% or more, and 50 mass% or less. The lower limit of the blending amount is more preferably 8 mass%, 9 mass%, and most preferably 10 mass%. The upper limit of the blending amount is more preferably 45 mass%, 40 mass%, 38 mass%, or 35 mass%, and most preferably 32 mass%. By using the cocoa substitute of the present invention in an appropriate blending amount, an oil-based food having a good flavor can be prepared even when the amount of components derived from cacao is reduced.

In the present invention, the cacao raw material refers to raw materials derived from cacao beans that are produced by processing cacao beans, such as cocoa mass and cocoa powder.

In the present invention, the content of the cacao raw material in the oil-based food is preferably 5 mass% or less, more preferably 4 mass% or less, 3 mass% or less, even more preferably 2 mass% or less or 1 mass% or less, or the oil-based food is preferably substantially free from the cacao raw material.

In the present invention, the term "oil-based food" refers to a food in which an oil and/or fat forms a continuous phase, and examples thereof include chocolates, butter creams, and spreads. The oil-based food of the present invention is preferably chocolate. The term "chocolate(s)" as used herein is not limited to "pure chocolate", "chocolate", "quasi-chocolate", and "chocolate-using foods" as defined by the Japan National Chocolate Industry Fair Trade Council and the Japan Fair Trade Council of the Chocolate-Using Foods, and refers to foods containing an oil and/or fat as an essential component and including oil and/or fat processed foods which use cocoa mass, cocoa powder, whole milk powder, dried fruit juice powder, dried vegetable powder, cocoa butter, cocoa butter alternatives, hard butter and the like. Accordingly, the term may also generally refer to foods in which edible substances are dispersed in an oil and/or fat-based matrix, including, for example, matcha-flavored foods and strawberry-flavored foods obtained by mixing powders derived from vegetables or fruits.

The roasted product as the cocoa substitute of the present invention has a content of free amino acids of 0.5 mg/g or more and 3.8 mg/g or less in nonfat solids. The lower limit is preferably 0.7 mg/g, 0.8 mg/g, more preferably 1.0 mg/g, 1.2 mg/g, and most preferably 1.3 mg/g. The upper limit is preferably 3.7 mg/g, 3.6 mg/g, more preferably 3.5 mg/g, and most preferably 3.4 mg/g. When the content of free amino acids is within a predetermined range, the roasted product, as a cocoa substitute, exhibits a rich, cacao-like aroma and flavor, and can be used as a substitute for cacao-derived components.

The content of free amino acids refers to a value quantified by liquid chromatography-mass spectrometry described below, and represents the amount of free amino acids contained in the nonfat solids of the roasted product serving as the cocoa substitute.

The nonfat solids of the roasted product serving as the cocoa substitute refers to the amount of the solids excluding water and oil contained in the roasted product.

The roasted product serving as a cocoa substitute of the present invention is characterized by the proportions of specific free amino acids contained in nonfat solids. By appropriately adjusting the proportions of free amino acids in the roasted product, the roasted product exhibits a rich aroma and flavor, and can be used as a cocoa substitute.

With respect to the proportions of free amino acids, the total proportion of isoleucine and leucine, the total proportion of glutamine and glutamic acid, and the proportion of lysine are particularly important.

The proportion of free amino acids is calculated based on the content of the free amino acids contained in the nonfat solids of the roasted product.

The total proportion of isoleucine and leucine in the free amino acids is 1 mass% or more and 20 mass% or less. The lower limit is preferably 1.2 mass% or 1.3 mass%, more preferably 1.5 mass% or 1.6 mass%, and even more preferably 1.7 mass%. The upper limit is preferably 18 mass%, more preferably 16 mass% or 15 mass%, and even more preferably 14 mass%.

The total proportion of glutamine and glutamic acid in the free amino acids is 3 mass% or more and 30 mass% or less. The lower limit is preferably 4 mass%, and more preferably 5 mass%. The upper limit is preferably 29 mass%, more preferably 28 mass% or 27 mass%, and even more preferably 26 mass%.

The proportion of lysine in the free amino acids is 1.5 mass% or more and 10 mass% or less. The lower limit is preferably 1.6 mass%, more preferably 1.7 mass% or 1.8 mass%, and even more preferably 1.9 mass%. The upper limit is preferably 9 mass% or 8 mass%, more preferably 7 mass%, and even more preferably 6 mass%.

By adjusting the total proportion of isoleucine and leucine in the free amino acids of the roasted product serving as a cocoa substitute to an appropriate range, the roasted product exhibits a rich, cacao-like aroma and flavor, and can be used as a cocoa substitute.

By adjusting the total proportion of glutamine and glutamic acid in the free amino acids of the roasted product serving as a cocoa substitute to an appropriate range, the roasted product exhibits a rich, cacao-like aroma and flavor, and can be used as a cocoa substitute.

By adjusting the proportion of lysine in the free amino acids of the roasted product serving as a cocoa substitute to an appropriate range, the roasted product exhibits a rich, cacao-like aroma and flavor, and can be used as a cocoa substitute.

The amount and proportion of free amino acids can be quantified as described below by measurement through liquid chromatography using liquid chromatography-mass spectrometry.

Hexane is added in a ten-fold amount (v/w) to a sample of a roasted product serving as a cocoa substitute or an oil-based food, followed by mixing, and the supernatant is removed. After the sample is defatted by repeating this procedure three times and dried, the sample is suspended in water at a concentration of 0.25 mass% or at a concentration within the quantitative range of an amino acid mixed standard solution described below, and centrifuged (at 14000 rpm for 5 minutes) to obtain a supernatant. The supernatant is passed through a cellulose acetate filter having a pore size of 0.2 µm and subjected to liquid chromatography to quantify free amino acids. Liquid chromatography is performed using Discovery HS F5 HPLC column at a column temperature of 40°C. As a solvent, solvent A (0.1 vol% formic acid-water) and solvent B (0.1 vol% formic acid-acetonitrile) are used. The gradient conditions are as follows: from 100% A to 75% A/25% B over 5 minutes, from 75% A/25% B to 65% A/35% B over 6 minutes, from 65% A/35% B to 5% A/95% B over 4 minutes, from 5% A/95% B to 95% A/5% B over 4.5 minutes, and from 95% A/5% B to 100% A over 0.5 minutes, at a flow rate of 250 µL/min. The sample is introduced into a mass spectrometer and analyzed using electrospray ionization in the positive mode. The analysis conditions for each amino acid are shown in Table 1. Quantification can be performed using an amino acid mixed standard solution (type H) as a standard.

**[Table 1]**

| | Precursor ion (m/z) | Product ion (m/z) | Cone voltage (V) | Collision energy (eV) |
|---|---|---|---|---|
| Aspartic acid | 134.0 | 88.10 | 10 | 8 |
| Asparagine | 133.1 | 87.15 | 10 | 9 |
| Serine | 105.9 | 60.10 | 10 | 12 |
| Alanine | 89.9 | 44.10 | 10 | 12 |
| Glycine | 75.9 | 30.15 | 10 | 11 |
| Threonine | 120.1 | 74.15 | 10 | 13 |
| Proline | 116.1 | 70.15 | 10 | 18 |
| Glutamic acid | 147.9 | 84.10 | 10 | 17 |
| Glutamine | 147.1 | 130.1 | 10 | 10 |
| Lysine | 147.1 | 84.10 | 10 | 18 |
| Histidine | 155.9 | 110.10 | 10 | 15 |
| Arginine | 175.1 | 70.10 | 10 | 23 |
| Valine | 118.1 | 72.15 | 10 | 13 |
| Methionine | 149.9 | 56.10 | 10 | 14 |
| Tyrosine | 182.1 | 136.10 | 10 | 15 |
| Isoleucine | 132.1 | 86.20 | 10 | 12 |
| Leucine | 132.1 | 86.05 | 10 | 12 |
| Phenylalanine | 166.1 | 120.10 | 10 | 15 |
| Tryptophan | 205.1 | 188.15 | 10 | 12 |
| Cysteine | 241.0 | 151.95 | 10 | 14 |

The amount of free amino acids contained in the nonfat solids of the oil-based food of the present invention is 0.3 mg/g or more and 2.1 mg/g or less. The lower limit is preferably 0.4 mg/g, more preferably 0.5 mg/g, and most preferably 0.6 mg/g. The upper limit is preferably 2.0 mg/g, more preferably 1.9 mg/g, and most preferably 1.8 mg/g. When the content of free amino acids is within a predetermined range, the oil-based food exhibits a rich, chocolate-like flavor and aroma, thereby providing an oil-based food with a good flavor.

The amount of free amino acids contained in the nonfat solids of the oil-based food can be analyzed in the same manner as the content of free amino acids contained in the nonfat solids of the roasted product described above.

The nonfat solids of the oil-based food refers to the amount of the solids excluding water and oil contained in the oil-based food.

The oil-based food of the present invention is characterized by the proportions of specific free amino acids contained in nonfat solids. By appropriately adjusting the proportions of free amino acids contained in the nonfat solids of the oil-based food, the oil-based food exhibits a rich, chocolate-like flavor and aroma, thereby providing an oil-based food with a good flavor.

With respect to the proportions of free amino acids, the total proportion of isoleucine and leucine, the total proportion of glutamine and glutamic acid, the proportion of lysine and the proportion of alanine are particularly important. The proportions of free amino acids contained in the nonfat solids of the oil-based food is not necessarily the same as the proportions of free amino acids contained in the nonfat solids of the roasted product serving as a cocoa substitute. This may be due to the fact that the oil-based food contains raw materials other than the roasted product serving as a cocoa substitute, as well as to a reduction in the amount of free amino acids due to the Maillard reaction during the production of the oil-based food. By subjecting free amino acids contained in the oil-based food to a Maillard reaction, the oil-based food exhibits a rich, chocolate-like flavor and aroma, thereby improving the flavor.

The total proportion of isoleucine and leucine in the free amino acids contained in the oil-based food is 0.9 mass% or more and 20 mass% or less in the free amino acids. The lower limit is preferably 1 mass%, and more preferably 1.1 mass%. The upper limit is preferably 18 mass%, more preferably 16 mass% or 15 mass%, and even more preferably 14 mass%.

The total proportion of glutamine and glutamic acid in the free amino acids contained in the oil-based food is 3 mass% or more and 35 mass% or less. The lower limit is preferably 4 mass%, and more preferably 5 mass%. The upper limit is preferably 34 mass%, more preferably 33 mass% or 32 mass%, and even more preferably 31 mass% or 30 mass%.

The proportion of lysine in the free amino acids contained in the oil-based food is 1.5 mass% or more and 10 mass% or less. The lower limit is preferably 1.6 mass%, more preferably 1.7 mass% or 1.8 mass%. The upper limit is preferably 9 mass%, more preferably 8 mass%, and even more preferably 7 mass%.

The proportion of alanine in the free amino acids contained in the oil-based food is 1.6 mass% or more and 10 mass% or less. The lower limit is preferably 1.7 mass%, more preferably 1.8 mass% or 1.9 mass%. The upper limit is preferably 9 mass%, more preferably 8 mass%, and even more preferably 7 mass%.

By adjusting the total proportion of isoleucine and leucine in the free amino acids contained in the oil-based food to an appropriate range, the oil-based food exhibits a rich, chocolate-like aroma and flavor, thereby providing an oil-based food with a good flavor.

By adjusting the total proportion of glutamine and glutamic acid in the free amino acids contained in the nonfat solids of the oil-based food to an appropriate range, the oil-based food exhibits a rich, chocolate-like aroma and flavor, thereby providing an oil-based food with a good flavor.

By adjusting the proportion of lysine in the free amino acids contained in the nonfat solids of the oil-based food to an appropriate range, the oil-based food exhibits a rich, chocolate-like aroma and flavor, thereby providing an oil-based food with a good flavor.

By adjusting the proportion of alanine in the free amino acids contained in the nonfat solids of the oil-based food to an appropriate range, the oil-based food exhibits a rich, chocolate-like flavor and aroma, thereby providing an oil-based food with a good flavor.

In the present invention, the oil content contained in the oil-based food is from 25 to 70 mass%, preferably from 27 to 65 mass%, more preferably from 30 to 60 mass% or from 32 to 55 mass%. By adjusting the oil content to an appropriate range, the oil-based food exhibits a rich, chocolate-like flavor and aroma.

The oil content in the oil-based food means the mass percentage of all oils and/or fats contained in whole milk powder or a cocoa substitute, as well as in other raw materials.

The oil content of the oil-based food can be measured by a typically known method such as a Soxhlet extraction method.

The oil-based food of the present invention contains about 0.3 to 2 mass% of water. This is not due to the intentional addition of water, but is attributable to the small amount of water inherently contained in the ingredients, such as cocoa substitutes, cacao raw materials, sugar, or milk powder.

The moisture content can be measured by a sea sand method.

The oil and/or fat used in the oil-based food of the present invention is not particularly limited, and examples of the oil and/or fat that can be used include vegetable oils and/or fats such as soybean oil, sunflower seed oil, high-oleic sunflower oil, cottonseed oil, rapeseed oil, high-erucic-acid rapeseed oil, peanut oil, rice oil, rice bran oil, corn oil, safflower oil, olive oil, kapok oil, sesame oil, safflower oil, evening primrose oil, linseed oil, palm oil, palm kernel oil, coconut oil, medium-chain triglycerides (MCTs), shea butter, and sal fat; animal oils and/or fats such as milk fat, beef tallow, lard, and fish oil; algal oils; oils and/or fats derived from microbial fermentation; and processed oils and/or fats obtained by hydrogenation, fractionation, hydrogenation-fractionation, fractionation-hydrogenation, or interesterification of these oils and/or fats, as well as mixed oils and/or fats thereof.

The ground material of legumes used in the present invention may be subjected to protease treatment and/or wetting treatment, or amino acids may be separately added, in order to adjust the content of free amino acids and the proportion of components in the nonfat solids of the roasted product serving as a cocoa substitute or oil-based food. Preferably, protease treatment or wetting treatment is performed. By using the ground material of legumes after the protease treatment or wetting treatment, a richer, cacao-like flavor and aroma can be obtained.

Furthermore, protease treatment is preferably performed in order to adjust the quality to a stable level.

In the present invention, the protease used in the protease treatment is not limited regardless of its origin and may be derived from animals, plants, or microorganisms, and can be appropriately selected from proteases classified as, for example, acid proteases, neutral proteases, alkaline proteases, metalloproteases, thiol proteases, serine proteases, and the like. Alternatively, proteases classified as endoproteases, exoproteases, and peptidases may also be appropriately selected. One of these proteases may be used alone, or these may be used in combination. Furthermore, these proteases may be used in the form of a preparation having one or more enzymatic activities. The protease may be used alone or in combination with one or more enzymes other than proteases. The preparation may or may not have enzymatic activities other than protease activity. In a specific embodiment, the protease is one or more selected from the group consisting of a neutral protease, an acid protease, an alkaline protease, and a peptidase. Acid protease is more preferred.

More specific examples of the protease used in the present invention include acid proteases derived from microorganisms such as the genus *Aspergillus*, *Penicillium*, and *Rhizopus*; neutral proteases derived from microorganisms such as the genus *Aspergillus*, *Streptomyces*, and *Bacillus*; alkaline proteases derived from microorganisms such as the genus *Aspergillus*, *Streptomyces*, and *Bacillus*; plant-derived proteases such as bromelain and papain; and animal-derived proteases such as trypsin, chymotrypsin and subtilisin. In addition, these may be used in any combination. In a more specific embodiment, the protease used in the present invention is a protease derived from the genus *Bacillus*, such as, for example, a protease derived from *Bacillus amyloliquefaciens* or a protease derived from *Bacillus licheniformis*.

Examples of commercially available proteases that can be used in the present invention include Protease A, Protease M, Protease P, Protease M "Amano" SD, Protease N, Protease NL, Protease S, Umamizyme, Peptidase R, Newlase A, Newlase F, Samoase PC10F, Samoase GL30, Papain W40, Protin SD-NY10, and Protin SD-AY10 (all of the above are available from Amano Enzyme Inc.); Sumizyme AP, Sumizyme LP, Sumizyme MP, Sumizyme FP, and Sumizyme LPL (all of the above are available from SHINNIHON CHEMICALS Corporation); Denapsin 2P, Denazyme AP, XP-415, Bioplase XL-416F, Bioplase SP-4FG, and Bioplase SP-15FG (all of the above are available from Nagase ChemteX Corporation); Molsin F, PD-Enzyme, IP-Enzyme, and AO-Protease (all the above from Kikkoman Corporation); Punchdase YP-SS, Punchdase NP-2, and Punchdase P (all of the above are available from Yakult Pharmaceutical Industry Co., Ltd.); Flavourzyme, Aroase, Protamex, Neutrase, and Alcalase (all of the above are available from Novozymes); and Kokulase SS and Kokulase P Granules (all of the above are available from Mitsubishi Chemical Corporation). One or two or more enzymes may be selected from these and used.

The amount of the protease to be used is not particularly limited and can be set freely by those skilled in the art according to the raw material to be used and the desired flavor. The amount of the protease to be used varies depending on the potency and the like, but in an embodiment, the amount is in the range of 0.01 to 100 mass% based on the mass of the ground legumes. In a specific embodiment, the amount of the protease or protease preparation used is from 0.01 to 80 mass%, for example, from 0.25 to 70 mass%, from 0.5 to 50 mass%, from 1 to 40 mass%, from 2 to 30 mass%, or from 3 to 20 mass% based on the mass of the ground legumes. In an embodiment, the amount of protein contained in a protease preparation is in the range of from 0.01 to 90 mass% based on the mass of the ground legumes. In a specific embodiment, the amount is from 0.01 to 10 mass%, for example, from 0.03 to 9 mass%, from 0.05 to 8 mass%, from 0.1 to 7 mass%, or from 0.2 to 6 mass%.

The protein mass in the protease preparation can be quantified by a combustion method or the Kjeldahl method, which are officially recognized methods.

The conditions of the protease treatment are not particularly limited and can be set freely by those skilled in the art according to factors such as the type of enzyme used. In an embodiment, the treatment temperature is from 20 to 80°C, for example, from 40 to 75°C or from 50 to 70°C, the treatment time is from 30 minutes to 24 hours, for example, from 1 to 20 hours, from 2 to 16 hours, from 3 to 12 hours, from 4 to 10 hours, or from 5 to 8 hours, and the pH of the treatment is from 2 to 12, for example, from 3 to 11, from 4 to 6, or any value within these ranges.

The treated product obtained by the protease treatment may be subjected to the roasting treatment as it is or may be dried before the roasting treatment. Examples of the drying treatment include heat drying, air-drying with ventilation, freeze drying, spray drying, and fluidized bed drying. In an embodiment, the treated product obtained by the protease treatment is dried at a drying temperature of 35 to 75°C, for example, of 40 to 70°C or of 45 to 60°C, for a drying time of 1 to 50 hours, for example, of 5 to 40 hours, of 10 to 35 hours, or of 15 to 30 hours, before roasting.

In the present invention, the term "wetting treatment" refers to adding water to a ground material of legumes and holding the mixture for a predetermined period of time. By holding the mixture in a moisture-containing state for a predetermined period of time, decomposition by endogenous enzymes proceeds, and the content of free amino acids and the proportion of components in the roasted product serving as a cocoa substitute or oil-based food can be adjusted.

The moisture content during the wetting treatment is not particularly limited and can be set freely by those skilled in the art according to the raw material to be used and the desired flavor. In an embodiment, the moisture content is preferably from 10 to 150 g, more preferably from 25 to 125 g, and even more preferably from 50 to 100 g based on 100 g of the ground legumes.

The temperature and time during the wetting treatment is not particularly limited and can be set freely by those skilled in the art according to the raw material to be used and the desired flavor. In one embodiment, the treatment temperature is from 20 to 80°C, for example, from 40 to 75°C or from 50 to 70°C, and the treatment time is from 30 minutes to 24 hours, for example, from 1 to 20 hours, from 2 to 16 hours, from 3 to 12 hours, from 4 to 10 hours, or from 5 to 8 hours. The pH during the treatment is not particularly limited. In one example, the pH of the treatment is from 2 to 12, for example, from 3 to 11, from 4 to 10, or any value within these ranges.

In the present invention, the ground material of legumes may be subjected to moist heat treatment prior to the protease treatment for quality stabilization. The moist heat treatment refers to a treatment of heating to 90°C or higher in a humidified state, such as an autoclave treatment. In the present invention, the ground material of legumes is preferably subjected to the protease treatment after the moist heat treatment. The ground material of legumes subjected to the above treatments can be used as a cocoa substitute having a good flavor by mixing the ground material with sugars, water, and oils and/or fats and roasting the mixture.

In the method for producing the cocoa substitute of the present invention, first, the ground material of legumes is subjected to protease treatment and/or wetting treatment. Next, the treated ground material of legumes is mixed with sugars, water, and oil and/or fat. The method may further include roasting the mixture. The mixture before roasting contains moisture and has a crumbly texture with small lumps. The moisture content is preferably from 5 to 30 mass%. The moisture content is more preferably from 7 to 28 mass%, and most preferably from 10 to 25 mass%. By adjusting the moisture content of the mixture to an appropriate range, flavor adjustment during roasting is facilitated. As a method for producing the cocoa substitute, a method in which a mixture obtained by previously mixing sugars, water, and oil and/or fat is added to the ground material of legumes and the mixture is roasted is preferred.

The equipment used for roasting is not particularly limited; however, equipment provided with stirring blades is preferred because uniform mixing and heating can be achieved. The heat source may be gas heating or induction heating as long as the temperature can be controlled. The heat source is preferably induction heating from the viewpoint of ease of temperature control.

In addition, roasting in the absence of stirring blades can be carried out by spreading the mixture on a flat dish or the like, and allowing uniform heating.

The roasting temperature and time are not limited because they can be adjusted by observing the color tone of the ground material of legumes and sugars during roasting. By way of example, the roasting temperature is preferably from 100°C to 250°C, more preferably from 110°C to 230°C, and even more preferably from 120°C to 200°C.

The roasting time is preferably 10 minutes or more, and more preferably 20 minutes or more, from the viewpoint of imparting a roasted flavor, a deep color tone, and a cacao-like flavor. The roasting temperature and time are not limited to those described above, since they vary depending on the roasting equipment used, and may be appropriately selected by adjusting the roasting temperature and time according to the color tone and flavor of the ground material of legumes and sugars after roasting.

Sugars that can be used for roasting in the present invention include monosaccharides and disaccharides, and sugar alcohols, oligosaccharides, and the like may also be blended as needed. Examples of monosaccharides include glucose, fructose, galactose, and xylose. Examples of disaccharides include sucrose, lactose, and maltose. At least one selected from the group of those can be used.

Sugars used during roasting are preferably monosaccharides such as glucose, fructose and xylose, and more preferably fructose and glucose.

Sugars that can be used for roasting in the present invention are preferably provided as aqueous sugar solutions, and more preferably as aqueous monosaccharide solutions. Examples of aqueous monosaccharide solutions include aqueous solutions of glucose, fructose, galactose, and xylose. Aqueous solutions of glucose, fructose, and xylose are more preferred, and aqueous solutions of fructose and glucose are even more preferred. The use of aqueous solutions of these monosaccharides is preferable in that color tones and flavors suitable for cocoa substitute and oil-based foods using the same can be obtained. Such sugars may be used in combination. Fructose-glucose syrup, honey, brown sugar, and the like containing the component described above can also be used without limitation.

In the present invention, the roasted product may be dried to evaporate moisture, as necessary, together with roasting. The temperature and time in the case of performing drying are not particularly limited, and drying can be performed at a temperature lower than that during roasting depending on the flavor and color tone.

Examples of drying conditions include drying at from 80 to 130°C for about 10 minutes. By performing drying, a roasted product having a predetermined moisture content can be obtained.

The oil-based food of the present invention can be produced in the same manner as typical chocolate products. Specifically, the oil-based food can be obtained by appropriately selecting and mixing, with oil and/or fat, raw materials such as the roasted product serving as a cocoa substitute, sugars, various powdered food materials including powdered milk, an emulsifier, an aroma agent, and a coloring agent; subjecting the mixture to roll refining as a refining step; adding the remaining raw materials as appropriate; and then performing conching as a kneading step or mixing treatment as a mixing step. Alternatively, for example, a production method in which a mixing step and a refining step are performed simultaneously using a ball mill, a bead mill, or the like can also be used.

The raw materials used for the oil-based food of the present invention can be used without particular limitation, except that the raw materials include the roasted product serving as a cocoa substitute. The composition of chocolates, which are typical oil-based foods, can also be applied for reference. For example, a milk component, an oil and/or fat, and other edible materials can be appropriately combined. Examples of other additives include emulsifiers, antioxidants, and aroma agents; however, the types and amounts thereof are not limited, and such additives may be omitted.

### Examples

Hereinafter, the present invention will be described in more detail with reference to Examples. In Examples, "%" and "parts" are all on a mass basis.

### (1) Study using kidney beans

A study was conducted using black kidney beans, which are a type of legume.

Black kidney beans were ground using a mill to obtain powdery ground legume, and the ground legume was then treated under the conditions shown in Table 2 according to the formulation shown in Table 2, thereby preparing treated powders. After drying each of the treated powders, the aroma and flavor of the dried powders were evaluated.

The treatments are shown below.

1) to 3) indicate the order of the treatment steps. For example, when treatment 1) was omitted, treatment 3) was performed after treatment 2).
1) Autoclave treatment: Autoclave conditions 121°C, 1 minute
2) Wetting treatment/protease treatment: Ground black kidney bean powder, water, and, as required, a protease were mixed, and the mixture was allowed to stand at 60°C for 2 hours.
   As the protease, SUMIZYME AP (available from SHINNIHON CHEMICALS Corporation) was used.
3) Drying treatment: The treated powder was allowed to stand and dried overnight using a vegetable dryer set at 45°C.

The treated powders obtained were evaluated for their flavors through a sensory evaluation by five well-trained expert panelists. In the sensory evaluation, the samples were scored on a scale of 1 to 5 by consensus of the five panelists in accordance with the following criteria. A score of 3 or higher was regarded as acceptable quality.

5 points: the panelist hardly perceives any beany odor or flavor, and the quality is very good.

4 points: the panelist perceives a slight beany odor and flavor, but the quality is good.

3 points: the panelist perceives a beany odor and flavor to some extent, but the quality is acceptable.

2 points: the panelist perceives a beany odor and flavor, and the quality is poor.

1 point: the panelist perceives a strong beany odor and flavor, and the quality is poor. The results are shown in Table 2.

**[Table 2]**

| | Treated powder a | Treated powder 1 | Treated powder 2 | Treated powder b | Treated powder 3 |
|---|---|---|---|---|---|
| Ground black kidney bean powder [part(s)] | 50.0 | 50.0 | 50.0 | 50.0 | 50.0 |
| Water [part(s)] | - | 37.5 | 37.5 | - | 37.5 |
| SUMIZYME AP [part(s)] | - | - | 0.5 | - | 0.5 |
| 1) Autoclave Treatment | Not conducted | Not conducted | Not conducted | Conducted | Conducted |
| 2) Wetting treatment/protease treatment | Not conducted | Conducted | Conducted | Not Conducted | Conducted |
| Addition of protease | Not added | Not added | Added | Not added | Added |
| 3) Drying Treatment | Not conducted | Conducted | Conducted | Conducted | Conducted |
| Flavor evaluation of dried powder [point(s)] | Strong beany odor 1 | Good 4 | Good 4 | Beany odor 2 | Very good 5 |

The treated powders 2 and 3 subjected to the protease treatment were free from beany odor and exhibited a good flavor. Even when no protease was added, the treated powder 1 subjected to the wetting treatment was free from beany odor and exhibited good flavor. It was considered that enzymes inherent in the legumes reacted during the wetting treatment.

Roasted products were prepared according to the formulations shown in Table 3 using the treated powder 3, which was rated particularly high in flavor evaluation among the treated powders. For comparison, a roasted product was also prepared using the treated powder a which was not subjected to the respective treatments. The formulations shown in Table 3 represent formulations at the time of charging.

Soy lecithin paste (product name "SLP-Paste" available from Tsuji Oil Mills Co., Ltd.) was used as soy lecithin.

The moisture content of the roasted products was in the range of 0.5 mass% to 1.5 mass% in all cases, indicating that most of the moisture had evaporated during roasting.

The moisture content was measured by a heat drying method.

For free amino acids, the roasted products prepared were defatted, and the contents of free amino acids were measured.

The oil content was measured by the following procedure using SpeedExtractor E-816 (available from Nihon Buchi K. K.).
1) 1 g of the sample was loaded into the apparatus using a pre-weighed cylindrical filter paper and extraction cup.
2) A chloroform/methanol solvent in a ratio of 2:1 was added to the apparatus.
3) The apparatus was operated with the following settings: heater output set to 100%, extraction for 15 minutes, rinsing for 30 minutes, and drying for 15 minutes.
4) 25 ml of petroleum ether was added to dissolve the extract.
5) 15 g of anhydrous sodium sulfate was added to dehydrate the mixture, followed by filtration.
6) After the filter paper was thoroughly rinsed with petroleum ether, the petroleum ether in the filtrate was completely distilled off.
7) The resulting filtrate was dried in a dryer at 105°C for 60 minutes and cooled, and the oil content was determined by measuring the mass.

The results are shown in Table 4.

### ◆ Evaluation in cocoa water-like beverage

1 g of the roasted product prepared and 4 g of sugar were mixed, and dispersed in 95 g of water to prepare cocoa water-like beverage, and the flavor was evaluated.

As a reference example, cocoa water prepared by replacing the roasted product with cocoa powder was also evaluated for flavor in the same manner.

In Flavor Evaluation 1 and Flavor Evaluation 2, the samples were scored on a scale of 1 to 5 by consensus of five well-trained expert panelists in accordance with the following criteria, in the same manner as for the flavor evaluation of the treated powder.

A commercially available cocoa powder having an oil content of 11 mass% was used.

### · Flavor Evaluation 1

5 points: the panelist perceives a strong cocoa-like aroma and flavor, comparable to those of cocoa powder.

4 points: the panelist perceives a cocoa-like aroma and flavor.

3 points: the panelist perceives a cocoa-like aroma and flavor, which, however, are weak and within an acceptable range.

2 points: the panelist perceives an insufficient cocoa-like aroma and flavor.

1 point: the panelist perceives no cocoa-like aroma or flavor.

### · Flavor Evaluation 2

5 points: the panelist perceives a very rich cocoa-like aroma and flavor which persist.

4 points: the panelist perceives a rich cocoa-like aroma and flavor which persist.

3 points: The persistence of the cocoa-like aroma and flavor is somewhat insufficient, but remains within an acceptable range.

2 points: A cocoa-like aroma and flavor do not persist.

1 point: No cocoa-like aroma or flavor is perceived, nor does it persist.

In both Flavor Evaluation 1 and Flavor Evaluation 2, a score of 3 or higher was regarded as acceptable. Samples scoring 3 or higher in either flavor evaluation were considered suitable for use as cocoa substitutes.

### · Overall Evaluation

Based on the results of Flavor Evaluation 1 and Flavor Evaluation 2 described above, the overall evaluation was determined according to the following criteria:

"Very good": Flavor Evaluation 1 scored 5 points or higher, and Flavor Evaluation 2 scored 4 points or higher.

"Good": Both Flavor Evaluation 1 and Flavor Evaluation 2 scored 3 points or higher, but the criteria for "Very good" were not met.

"Unacceptable": A score of 2 points or lower was obtained in at least one of Flavor Evaluation 1 or Flavor Evaluation 2.

**[Table 3]**

| | Comparative Example 1 | Example 1 | Comparative Example 2 | Comparative Example 3 | Comparative Example 4 |
|---|---|---|---|---|---|
| Treated powder 3 [part(s)] | 87.0 | 70.4 | 71.4 | - | - |
| Treated powder a [part(s)] | - | - | - | 87.0 | 71.4 |
| Water [part(s)] | 13.0 | 10.6 | 10.7 | 13.0 | 10.7 |
| Honey [part(s)] | - | 17.6 | 17.9 | - | 17.9 |
| Soy lecithin [part(s)] | - | 1.4 | - | - | - |

**[Table 4]**

| | Comparative Example 1 | Example 1 | Comparative Example 2 | Comparative Example 3 | Comparative Example 4 | Reference: Cocoa |
|---|---|---|---|---|---|---|
| Oil content [%]/in roasted product | 3.1 | 4.1 | 2.5 | 3.1 | 2.5 | |
| Free amino acids [mg/g] | 3.9 | 1.6 | 1.4 | 5.6 | 1.5 | |
| Total proportion of asparagine and aspartic acid [%]* | 32.91 | 33.53 | 34.59 | 32.59 | 36.43 | |
| Serine [%]* | 0.48 | 0.14 | 0.36 | 0.56 | 0 | |
| Alanine [%]* | 3.16 | 2.49 | 2.46 | 2.29 | 1.61 | |
| Glycine [%]* | 1.33 | 1.11 | 1.66 | 1.47 | 1.94 | |
| Threonine [%]* | 1.39 | 1.38 | 1.52 | 1.78 | 1.66 | |
| Proline [%]* | 1.12 | 1.24 | 0.95 | 0.93 | 1.07 | |
| **Total proportion of glutamine and glutamic acid [%]*** | **21.2** | **23.88** | **23.85** | **24.16** | **31.88** | |
| **Lysine [%]*** | **2.49** | **2.05** | **2.03** | **1.13** | **0.4** | |
| Histidine [%]* | 1.79 | 1.5 | 1.48 | 2.31 | 0.94 | |
| Arginine [%]* | 26.55 | 26.29 | 24.89 | 25.47 | 19.25 | |
| Valine [%]* | 1.92 | 1.64 | 1.6 | 2.07 | 1.81 | |
| Methionine [%]* | 0.18 | 0.06 | 0.05 | 0.18 | 0 | |
| Tyrosine [%]* | 0.48 | 0.42 | 0.4 | 0.66 | 0.39 | |
| **Total proportion of isoleucine and leucine [%]*** | **2.63** | **2.08** | **2.00** | **2.10** | **0.90** | |
| Phenylalanine [%]* | 1.17 | 0.98 | 0.98 | 0.99 | 0.71 | |
| Tryptophan [%]* | 1.2 | 1.21 | 1.18 | 1.31 | 1.00 | |
| (Beverage) Flavor Evaluation 1 [point(s)] | 2 | 5 | 3 | 1 | 2 | 5 |
| (Beverage) Flavor Evaluation 2 [point(s)] | 2 | 5 | 2 | 1 | 1 | 5 |
| (Beverage) Overall evaluation | Unacceptable | Very good | Unacceptable | Unacceptable | Unacceptable | Very good |

| | | | | | | |
|---|---|---|---|---|---|---|
| * The symbol "[%]*" indicates the percentage relative to the free amino acids. | | | | | | |

The roasted products of Examples exhibited a strong cocoa-like aroma and flavor, and the rich flavor persisted. Therefore, the products were considered suitable for use as cocoa substitutes.

### ◆ Evaluation in oil-based food

Chocolate-like oil-based foods were prepared using each of the roasted products of Comparative Examples and Examples that were used in the evaluation of the cocoa water-like beverage. The formulations of the oil-based foods are shown in Table 5.

A hard butter (product name "Parkena S" available from Fuji Oil Co., Ltd.) was used as the vegetable oil and/or fat.

The oil-based foods of Comparative Examples and Examples, as well as Reference Example 1 using cocoa powder, were prepared in the following manner.

The roasted product, cocoa powder, and sugar were blended according to the description in Table 5, and refined using a ball mill (ShakeMaster AUTO available from Bio Medical Science Inc.).

Thereafter, vegetable oils and/or fats and lecithin were added, followed by mixing and refining to prepare an oil-based food.

The following products were used in Reference Examples 2 and 3.
Reference Example 2: Sweet Chocolate (available from Fuji Oil Co., Ltd.)
Reference Example 3: Milk Chocolate (available from Fuji Oil Co., Ltd.)

The oil-based foods prepared and the chocolates of Reference Examples were defatted, and the contents of free amino acids were measured.

In addition, Flavor Evaluation a and Flavor Evaluation b were performed. The flavor was evaluated by sensory evaluation in the same manner as previously described for the evaluation of the treated powders or roasted products by five well-trained expert panelists. In the sensory evaluation, the samples were scored on a scale of 1 to 5 by consensus of the five panelists in accordance with the following criteria.

### · Flavor Evaluation a

5 points: The panelist perceives a strong cocoa-containing chocolate-like aroma and flavor.

4 points: The panelist perceives a cocoa-containing chocolate-like aroma and flavor.

3 points: The panelist perceives a cocoa-containing chocolate-like aroma and flavor, which are somewhat weak and within an acceptable range.

2 points: The panelist hardly perceives any cocoa-containing chocolate-like aroma and flavor.

1 point: The panelist perceives no cocoa-containing chocolate-like aroma or flavor.

### · Flavor Evaluation b

5 points: The panelist perceives a very rich chocolate-like flavor, which remains clearly perceptible until the food is completely consumed.

4 points: The panelist perceives a rich chocolate-like flavor, which remains perceptible until the food is completely consumed.

3 points: The richness of the chocolate-like flavor is weak and its persistence is somewhat insufficient, but remains within an acceptable range.

2 points: The chocolate-like flavor lacks richness and does not persist sufficiently.

1 point: The panelist perceives no chocolate-like flavor, and it does not persist.

In both Flavor Evaluation a and Flavor Evaluation b, a score of 3 or higher was regarded as acceptable. Samples scoring 3 or higher in either flavor evaluation were considered suitable for use as cocoa substitutes.

### · Overall evaluation

Based on the results of Flavor Evaluation a and Flavor Evaluation b described above, the overall evaluation was determined according to the following criteria:

"Very good": Flavor Evaluation a scored 5 points or higher, and Flavor Evaluation b scored 4 points or higher.

"Good": Both Flavor Evaluation a and Flavor Evaluation b scored 3 points or higher, but the criteria for "Very good" were not met.

"Unacceptable": A score of 2 points or lower was obtained in at least one of Flavor Evaluation a or Flavor Evaluation b.

The results are shown in Table 6.

**[Table 5]**

| | Comparative Example 5 (Oil-based food) | Example 2 (Oil-based food) | Comparative Example 6 (Oil-based food) | Comparative Example 7 (Oil-based food) | Comparative Example 8 (Oil-based food) | Reference Example 1 (Oil-based food) | Reference Example 2 (Oil-based food) | Reference Example 3 (Oil-based food) |
|---|---|---|---|---|---|---|---|---|
| Comparative Example 1 [part(s)] | 20.0 | - | - | - | - | - | - | - |
| Example 1 [part(s)] | - | 20.0 | - | - | - | - | - | - |
| Comparative Example 2 [part(s)] | - | - | 20.0 | - | - | - | - | - |
| Comparative Example 3 [part(s)] | - | - | - | 20.0 | - | - | - | - |
| Comparative Example 4 [part(s)] | - | - | - | - | 20.C | - | - | - |
| Cocoa [part(s)] | - | - | - | - | - | 20.0 | - | - |
| Cocoa mass [part(s)] | - | - | - | - | - | - | 40.2 | 14.6 |
| Whole milk powder [part(s)] | - | - | - | - | - | - | - | 22.1 |
| Sugar [part(s)] | 34.9 | 34.9 | 34.9 | 34.9 | 34.9 | 34.9 | 47.3 | 43.9 |
| Vegetable oil and/or fat [part(s)] | 44.9 | 44.9 | 44.9 | 44.9 | 44.9 | 44.9 | - | - |
| Cocoa butter [part(s)] | - | - | - | - | - | - | 11.9 | 18.9 |
| Soy lecithin [part(s)] | 0.2 | 0.2 | 0.2 | 0.2 | 0.2 | 0.2 | 0.5 | 0.5 |

**[Table 6]**

| | Comparative Example 5 (Oil-based food) | Example 2 (Oil-based food) | Comparative Example 6 (Oil-based food) | Comparative Example 7 (Oil-based food) | Comparative Example 8 (Oil-based food) | Reference Example 1 (Oil-based food) | Reference Example 2 (Oil-based food) | Reference Example 3 (Oil-based food) |
|---|---|---|---|---|---|---|---|---|
| Free amino acids [mg/g] | 2.2 | 0.9 | 0.6 | 3.2 | 0.6 | 2.5 | 2.6 | 1.1 |
| Total proportion of asparagine and aspartic acid [%]* | 7.46 | 8.30 | 3.83 | 9.00 | 6.77 | 1.83 | 3.24 | 2.43 |
| Serine [%]* | 0 | 0.65 | 0 | 0 | 0 | 0.52 | 0.25 | 0 |
| **Alanine [%]*** | **2.96** | **3.53** | **1.54** | **1.72** | **0** | **18.59** | **14.50** | **11.86** |
| Glycine [%]* | 0 | 1.22 | 0 | 1.85 | 0 | 0 | 0 | 0 |
| Threonine [%]* | 2.19 | 1.34 | 2.85 | 2.03 | 2.85 | 4.05 | 3.82 | 3.93 |
| Proline [%]* | 1.26 | 1.91 | 1.23 | 2.14 | 1.81 | 7.72 | 5.86 | 5.74 |
| **Total proportion of glutamine and glutamic acid [%]*** | **20.01** | **27.64** | **17.05** | **25.15** | **25.14** | **2.07** | **1.70** | **7.30** |
| **Lysine [%]*** | **3.42** | **3.15** | **2.06** | **1.17** | **0.10** | **4.28** | **5.24** | **4.04** |
| Histidine [%]* | 2.47 | 1.88 | 5.27 | 3.48 | 4.86 | 1.31 | 1.57 | 2.53 |
| Arginine [%]* | 49.42 | 47.33 | 56.24 | 44.56 | 50.29 | 5.14 | 7.73 | 9.33 |
| Valine [%]* | 2.85 | 0.99 | 2.81 | 2.58 | 2.77 | 10.99 | 10.43 | 10.45 |
| Methionine [%]* | 0.25 | 0 | 0 | 0.23 | 0 | 0 | 0.19 | 0 |
| Tyrosine [%]* | 1.02 | 0 | 0.89 | 1.03 | 1.31 | 10.53 | 10.23 | 9.72 |
| **Total proportion of isoleucine and leucine [%]*** | **3.50** | **1.55** | **2.72** | **2.34** | **1.47** | **21.40** | **21.27** | **20.20** |
| Phenylalanine [%]* | 1.46 | 0.27 | 1.50 | 1.22 | 1.06 | 10.58 | 12.90 | 11.34 |
| Tryptophan [%]* | 1.73 | 0.24 | 2.01 | 1.52 | 1.59 | 0.99 | 1.07 | 1.13 |
| Flavor Evaluation a [point(s)] | 2 | 5 | 3 | 1 | 2 | 5 | 5 | 5 |
| Flavor Evaluation b [point(s)] | 2 | 4 | 2 | 1 | 1 | 4 | 5 | 5 |
| Overall evaluation | Unacceptable | Very good | Unacceptable | Unacceptable | Unacceptable | Very good | Very good | Very good |

| | | | | | | | | |
|---|---|---|---|---|---|---|---|---|
| * The symbol "[%]*" indicates the percentage relative to the free amino acids. | | | | | | | | |

The oil-based foods of Examples exhibited a good, chocolate-like aroma and flavor comparable to those of reference examples using cocoa ingredients, particularly cocoa powder. In addition, the chocolate-like flavor was rich and remained perceptible until the food was completely consumed, resulting in a good flavor.

In the same manner as in Examples 1 and 2, in which treated powder 3 shown in Table 2 was used, cocoa substitutes and oil-based foods were prepared using treated powders 1 and 2, which were rated as good in flavor evaluation of the treated powders.

The formulations are shown in Table 7.

Free amino acid measurement and flavor evaluation were carried out in the same manner as described in "◆Evaluation in cocoa water-like beverage" and "◆Evaluation in oil-based food," respectively. The results are shown in Table 8.

**[Table 7]**

| | Example 3 | Example 4 |
|---|---|---|
| Treated powder 1 [part(s)] | 70.4 | - |
| Treated powder 2 [part(s)] | - | 70.4 |
| Water [part(s)] | 10.6 | 10.6 |
| Honey [part(s)] | 17.6 | 17.6 |
| Soy lecithin [part(s)] | 1.4 | 1.4 |

| | Example 5 (Oil-based food) | Example 6 (Oil-based food) |
|---|---|---|
| Example 3 [part(s)] | 20.0 | - |
| Example 4 [part(s)] | - | 20.0 |
| Sugar [part(s)] | 34.9 | 34.9 |
| Vegetable oil and/or fat [part(s)] | 44.9 | 44.9 |
| Soy lecithin [part(s)] | 0.2 | 0.2 |

**[Table 8]**

| | Example 3 | Example 4 |
|---|---|---|
| Oil content [%]/in roasted product | 4.2 | 4.1 |
| Free amino acids [mg/g] | 1.9 | 2.8 |
| Total proportion of asparagine and aspartic acid [%]* | 25.02 | 16.94 |
| Serine [%]* | 4.34 | 3.68 |
| Alanine [%]* | 6.60 | 7.56 |
| Glycine [%]* | 2.80 | 1.67 |
| Threonine [%]* | 4.66 | 5.14 |
| Proline [%]* | 4.70 | 6.21 |
| **Total proportion of glutamine and glutamic acid [%]*** | **5.47** | **5.68** |
| **Lysine [%]*** | **2.28** | **5.33** |
| Histidine [%]* | 1.75 | 1.54 |
| Arginine [%]* | 28.88 | 20.35 |
| Valine [%]* | 2.19 | 4.05 |
| Methionine [%]* | 0.40 | 1.19 |
| Tyrosine [%]* | 1.75 | 3.12 |
| **Total proportion of isoleucine and leucine [%]*** | **6.55** | **12.91** |
| Phenylalanine [%]* | 2.02 | 4.06 |
| Tryptophan [%]* | 0.59 | 0.56 |
| (Beverage) Flavor Evaluation 1 [point(s)] | 5 | 5 |
| (Beverage) Flavor Evaluation 2 [point(s)] | 5 | 5 |
| (Beverage) Overall evaluation | Very good | Very good |

| | Example 5 (Oil-based food) | Example 6 (Oil-based food) |
|---|---|---|
| Free amino acids [mg/g] | 0.7 | 1.1 |
| Total proportion of asparagine and aspartic acid [%]* | 8.37 | 4.80 |
| Serine [%]* | 1.11 | 1.17 |
| **Alanine [%]*** | **7.88** | **8.34** |
| Glycine [%]* | 2.56 | 1.53 |
| Threonine [%]* | 3.66 | 4.51 |
| Proline [%]* | 3.70 | 6.23 |
| **Total proportion of glutamine and glutamic acid [%]*** | **5.66** | **7.00** |
| **Lysine [%]*** | **2.69** | **6.29** |
| Histidine [%]* | 2.14 | 1.93 |
| Arginine [%]* | 49.49 | 30.54 |
| Valine [%]* | 2.85 | 5.00 |
| Methionine [%]* | 0 | 1.12 |
| Tyrosine [%]* | 1.48 | 3.42 |
| **Total proportion of isoleucine and leucine [%]*** | **6.37** | **13.56** |
| Phenylalanine [%]* | 1.81 | 4.13 |
| Tryptophan [%]* | 0.23 | 0.45 |
| Flavor Evaluation a [point(s)] | 5 | 5 |
| Flavor Evaluation b [point(s)] | 4 | 4 |
| Overall evaluation | Very good | Very good |

| | | |
|---|---|---|
| * The symbol "[%]*" indicates the percentage relative to the free amino acids. | | |

The roasted products prepared using the treated powder 1 and the treated powder 2 exhibited a strong cocoa-like aroma and flavor, and the rich flavor persisted, as was the case with the treated powder 3. Therefore, the products were considered suitable for use as cocoa substitutes. In addition, a good chocolate-like flavor was perceived in the oil-based foods prepared using the roasted products of Examples.

### (2) Study using peas

Using yellow peas, which are a type of legume, the same study as that conducted for kidney beans was performed.

Yellow peas were ground using a mill to obtain powdered ground legume, and the ground legume was then treated under the conditions shown in Table 9 according to the formulation shown in Table 9, thereby preparing treated powders. After drying each of the treated powders, the aroma and flavor of the dried powder were confirmed.

The treatments 1), 2), and 3) were performed in the same manner as in (1) Study using kidney beans.

The flavor evaluation was also performed by sensory evaluation according to the same criteria as in (1) Study using kidney beans.

The results are shown in Table 9.

**[Table 9]**

| | Treated powder c | Treated powder 4 | Treated powder 5 | Treated powder d | Treated powder 6 |
|---|---|---|---|---|---|
| Ground Yellow Peas [part(s)] | 50.0 | 50.0 | 50.0 | 50.0 | 50.0 |
| Water [part(s)] | - | 37.5 | 37.5 | - | 37.5 |
| SUMIZYME AP [part(s)] | - | - | 0.5 | - | 0.5 |
| 1) Autoclave Treatment | Not conducted | Not conducted | Not conducted | Conducted | Conducted |
| 2) Wetting treatment/protease treatment | Not conducted | Conducted | Conducted | Not conducted | Conducted |
| Addition of protease | Not added | Not added | Added | Not added | Added |
| 3) Drying Treatment | Not conducted | Conducted | Conducted | Conducted | Conducted |
| Flavor Evaluation of Dry Powder [point(s)] | Strong beany odor 1 | Good 4 | Good 4 | Beany odor 2 | Very good 5 |

Roasted products were prepared according to the formulations shown in Table 10 using treated powders 4, 5, and 6, which were rated as good or very good in flavor evaluation. For comparison, a roasted product was prepared in the same manner, using the treated powder c, which exhibited a strong beany odor. The formulations shown in Table 10 represent formulations at the time of charging. The moisture content of the roasted products was in the range of 0.5 mass% to 1.5 mass%, indicating that the moisture had evaporated during roasting, as in the case of kidney beans.

Furthermore, chocolate-like oil-based foods were prepared using the roasted products in the same manner as in Example 2 described above. The formulations of the oil-based foods are shown in Table 10. The oil content of the roasted product was measured.

The roasted products and oil-based foods prepared were defatted, and the contents of free amino acids were measured.

In the flavor evaluation of the roasted products and oil-based foods, Flavor Evaluation 1 and Flavor Evaluation 2, or Flavor Evaluation a and Flavor Evaluation b were performed according to the same criteria as in "◆Evaluation in cocoa water-like beverage" and "◆Evaluation in oil-based food" in (1) Study using kidney beans. The results of the of free amino acids and flavor evaluations are shown in Table 11 together with the overall evaluation.

**[Table 10]**

| | Example 7 | Example 8 | Example 9 | Comparative Example 9 |
|---|---|---|---|---|
| Treated powder 4 [part(s)] | 70.4 | - | - | - |
| Treated powder 5 [part(s)] | - | 70.4 | - | - |
| Treated powder 6 [part(s)] | - | - | 70.4 | - |
| Treated powder c [part(s)] | - | - | - | 71.4 |
| Water [part(s)] | 10.6 | 10.6 | 10.6 | 10.7 |
| Honey [part(s)] | 17.6 | 17.6 | 17.6 | 17.9 |
| Soy lecithin [part(s)] | 1.4 | 1.4 | 1.4 | - |

| | Example 10 (Oil-based food) | Example 11 (Oil-based food) | Example 12 (Oil-based food) | Comparative Example 10 (Oil-based food) |
|---|---|---|---|---|
| Example 7 [part(s)] | 20.0 | - | - | - |
| Example 8 [part(s)] | - | 20.0 | - | - |
| Example 9 [part(s)] | - | - | 20.0 | - |
| Comparative Example 9 [part(s)] | - | - | - | 20.0 |
| Sugar [part(s)] | 34.9 | 34.9 | 34.9 | 34.9 |
| Vegetable oil and/or fat [part(s)] | 44.9 | 44.9 | 44.9 | 44.9 |
| Soy lecithin [part(s)] | 0.2 | 0.2 | 0.2 | 0.2 |

**[Table 11]**

| | Example 7 | Example 8 | Example 9 | Comparative Example 9 |
|---|---|---|---|---|
| Oil content [%]/in roasted product | 4.0 | 3.9 | 3.9 | 2.3 |
| Free amino acids [mg/g] | 2.3 | 3.3 | 3.2 | 2.2 |
| Total proportion of asparagine and aspartic acid [%]* | 14.69 | 12.33 | 16.42 | 23.65 |
| Serine [%]* | 1.63 | 2.58 | 1.17 | 0.1 |
| Alanine [%]* | 2.38 | 5.03 | 1.87 | 1.74 |
| Glycine [%]* | 2.06 | 1.66 | 1.29 | 1.66 |
| Threonine [%]* | 2.15 | 3.22 | 1.84 | 1.84 |
| Proline [%]* | 8.13 | 7.56 | 6.46 | 3.58 |
| **Total proportion of glutamine and glutamic acid [%]*** | **20.6** | **14.47** | **22.89** | **29.45** |
| **Lysine [%]*** | **1.68** | **4.23** | **2.85** | **1.34** |
| Histidine [%]* | 0.22 | 0.56 | 0.45 | 0.35 |
| Arginine [%]* | 38.9 | 27 | 39.84 | 32.20 |
| Valine [%]* | 1.77 | 4.57 | 0.87 | 0.94 |
| Methionine [%]* | 0 | 0.41 | 0 | 0 |
| Tyrosine [%]* | 1.04 | 2.63 | 0.68 | 0.43 |
| **Total proportion of isoleucine and leucine [%]*** | **3.04** | **9.79** | **1.89** | **0.72** |
| Phenylalanine [%]* | 1.45 | 3.43 | 1.05 | 1.06 |
| Tryptophan [%]^{*} | 0.26 | 0.53 | 0.43 | 0.94 |
| (Beverage) Flavor Evaluation 1 [point(s)] | 4 | 5 | 5 | 2 |
| (Beverage) Flavor Evaluation 2 [point(s)] | 5 | 5 | 5 | 1 |
| (Beverage) Overall evaluation | Good | Very good | Very good | Unacceptable |

| | Example 10 (Oil-based food) | Example 11 (Oil-based food) | Example 12 (Oil-based food) | Comparative Example 10 (Oil-based food) |
|---|---|---|---|---|
| Free amino acids [mg/g] | 1.0 | 1.5 | 1.3 | 1.0 |
| Total proportion of asparagine and aspartic acid [%]^{*} | 3.92 | 3.14 | 4.35 | 2.76 |
| Serine [%]^{*} | 0.55 | 0.71 | 0.39 | 0 |
| **Alanine [%]^{*}** | **2.47** | **5.12** | **2.00** | **0.93** |
| Glycine [%]^{*} | 1.74 | 0.95 | 1.18 | 0 |
| Threonine [%]^{*} | 1.59 | 2.85 | 1.42 | 2.51 |
| Proline [%]^{*} | 7.10 | 6.68 | 5.91 | 3.10 |
| **Total proportion of glutamine and glutamic acid [%]^{*}** | **19.24** | **13.91** | **22.97** | **21.29** |
| **Lysine [%]^{*}** | **1.87** | **5.12** | **3.01** | **1.33** |
| Histidine [%]^{*} | 0.07 | 0.55 | 0.36 | 2.67 |
| Arginine [%]^{*} | 55.37 | 38.86 | 55.29 | 58.84 |
| Valine [%]^{*} | 1.59 | 5 | 0.67 | 1.38 |
| Methionine [%]^{*} | 0 | 0.48 | 0 | 0 |
| Tyrosine [%]^{*} | 0.76 | 2.8 | 0.34 | 1.27 |
| **Total proportion of isoleucine and leucine [%]^{*}** | **2.34** | **9.89** | **1.25** | **0.98** |
| Phenylalanine [%]^{*} | 1.29 | 3.41 | 0.75 | 1.49 |
| Tryptophan [%]^{*} | 0.10 | 0.53 | 0.11 | 1.45 |
| Flavor Evaluation a [point(s)] | 4 | 5 | 5 | 2 |
| Flavor Evaluation b [point(s)] | 4 | 4 | 4 | 1 |
| Overall evaluation | Good | Very good | Very good | Unacceptable |

| | | | | |
|---|---|---|---|---|
| * The symbol "[%]^{*}" indicates the percentage relative to the free amino acids. | | | | |

As in the results of "(1) Study using kidney beans", when peas were used, the roasted products of Examples exhibited a strong cocoa-like aroma and flavor, and the rich flavor persisted. Therefore, the products were considered suitable for use as cocoa substitutes. The oil-based food exhibited a good, chocolate-like aroma and flavor. Furthermore, the chocolate-like flavor of the oil-based food was rich and remained perceptible until the food was completely consumed, resulting in a good flavor.

### (3) Study of Oil and/or Fat Components Used in Roasted Product

When roasting treated powder 6 of peas obtained in "(2) Study using peas", a study using oil and/or fat components other than soy lecithin and a study in which soy lecithin was added in a larger amount were conducted.

As the palm oil, palm olein having an iodine value of 68 was used.

As the corn oil, edible corn oil having an iodine value of 120 was used.

As the palm kernel oil, palm kernel stearin having an iodine value of 7 was used.

Roasted products were prepared according to the formulations shown in Table 12. The formulations shown in Table 12 represent formulations at the time of charging. The moisture content of the roasted products obtained was in the range of 0.5 mass% to 1.5 mass%, indicating that the moisture had evaporated during roasting.

Furthermore, chocolate-like oil-based foods were prepared using the roasted products in the same manner as in Example 2 described above. The formulations of the oil-based foods are shown in Table 12.

The oil-based foods prepared were defatted, and the contents of free amino acids were measured.

In the flavor evaluation of the oil-based food, Flavor Evaluation a and Flavor Evaluation b were performed according to the same criteria as in "◆Evaluation in oil-based food" in (1) Study using kidney beans. The results of the free amino acids and flavor evaluation are shown in Table 13 together with the overall evaluation.

**[Table 12]**

| | Example 13 | Example 14 | Example 15 | Example 16 |
|---|---|---|---|---|
| Treated powder 6 [part(s)] | 70.4 | 70.4 | 70.4 | 68.5 |
| Water [part(s)] | 10.6 | 10.6 | 10.6 | 10.3 |
| Honey [part(s)] | 17.6 | 17.6 | 17.6 | 17.1 |
| Soy lecithin [part(s)] | - | - | - | 4.1 |
| Palm oil [part(s)] | 1.4 | - | - | - |
| Corn oil [part(s)] | - | 1.4 | - | - |
| Palm kernel oil [part(s)] | - | - | 1.4 | - |
| | | | | |

| | Example 17 (Oil-based food) | Example 18 (Oil-based food) | Example 19 (Oil-based food) | Example 20 (Oil-based food) |
|---|---|---|---|---|
| Cocoa substitute used | Example 13 | Example 14 | Example 15 | Example 16 |
| Powder of Example [part(s)] | 20.0 | 20.0 | 20.0 | 20.0 |
| Sugar [part(s)] | 34.9 | 34.9 | 34.9 | 34.9 |
| Vegetable oil and/or fat [part(s)] | 44.9 | 44.9 | 44.9 | 44.9 |
| Soy lecithin [part(s)] | 0.2 | 0.2 | 0.2 | 0.2 |

**[Table 13]**

| | Example 17 (Oil-based food) | Example 18 (Oil-based food) | Example 19 (Oil-based food) | Example 20 (Oil-based food) |
|---|---|---|---|---|
| Cocoa substitute used | Example 13 | Example 14 | Example 15 | Example 16 |
| Oil content [%]/in roasted product | 3.9 | 3.9 | 3.9 | 7 |
| Free amino acids [mg/g] | 1.3 | 1.3 | 1.3 | 1.3 |
| **Alanine [%]^{*}** | **2.00** | **2.00** | **2.00** | **1.95** |
| **Total proportion of glutamine and glutamic acid [%]^{*}** | **22.97** | **22.97** | **22.97** | **22.34** |
| **Lysine [%]^{*}** | **3.01** | **3.01** | **3.01** | **2.93** |
| **Total proportion of isoleucine and leucine [%]^{*}** | **1.25** | **1.25** | **1.25** | **1.22** |
| Flavor Evaluation a [point(s)] | 5 | 5 | 5 | 4 |
| Flavor Evaluation b [point(s)] | 4 | 4 | 4 | 4 |
| Overall evaluation | Very good | Very good | Very good | Good |

| | | | | |
|---|---|---|---|---|
| * The symbol "[%]^{*}" indicates the percentage relative to the free amino acids. | | | | |

When the oil and/or fat component used in the roasted product was changed, the oil-based foods exhibited a good, chocolate-like aroma and flavor comparable to the oil-based foods of Examples studied above. The chocolate-like flavor of the oil-based food was rich and remained perceptible until the food was completely consumed, resulting in a good flavor.

### (4) Change of Blending Amount of Cocoa Substitute

Chocolate-like oil-based foods were prepared in the same manner as in Example 2 described above using the roasted product of Example 1 obtained above. The blending amount of the roasted product used as a cocoa substitute was changed from that in Example 2. The formulations of the oil-based foods are shown in Table 14.

The oil-based foods prepared were defatted, and the contents of free amino acids were measured.

In the flavor evaluation of the oil-based food, Flavor Evaluation a and Flavor Evaluation b were performed according to the same criteria as in "◆Evaluation in oil-based food" in (1) Study using kidney beans. The results of the free amino acids and flavor evaluation are shown in Table 15 together with the overall evaluation.

**[Table 14]**

| | Example 21 (Oil-based food) | Example 22 (Oil-based food) |
|---|---|---|
| Cocoa substitute used | Example 1 | Example 1 |
| Powder of Example [part(s)] | 25.0 | 30.0 |
| Sugar [part(s)] | 34.9 | 34.9 |
| Vegetable oil and/or fat [part(s)] | 39.9 | 34.9 |
| Soy lecithin [part(s)] | 0.2 | 0.2 |

**[Table 15]**

| | Example 21 (Oil-based food) | Example 22 (Oil-based food) |
|---|---|---|
| Cocoa substitute used | Example 1 | Example 1 |
| Oil content [%]/in roasted product | 4.1 | 4.1 |
| Free amino acids [mg/g] | 1.0 | 1.2 |
| Alanine [%]* | 3.29 | 3.28 |
| **Total proportion of glutamine and glutamic acid** | 29.46 | 28.69 |
| **Lysine [%]*** | 3.87 | 3.70 |
| **Total proportion of isoleucine and leucine [%]*** | 2.04 | 2.31 |
| Flavor Evaluation a [point(s)] | 5 | 5 |
| Flavor Evaluation b [point(s)] | 4 | 4 |
| Overall evaluation | Very good | Very good |

| | | |
|---|---|---|
| * The symbol "[%]*" indicates the percentage relative to the free amino acids. | | |

When the blending amount of the roasted product used as a cocoa substitute was changed, the oil-based foods exhibited a good, chocolate-like aroma and flavor. The chocolate-like flavor of the oil-based food was rich and remained perceptible until the food was completely consumed, resulting in a good flavor.

The above study results indicate that a cocoa substitute satisfying the following conditions is suitable.
(1) The cocoa substitute includes at least one legume as a raw material.
(2) The cocoa substitute is a roasted product containing a ground material of the legume.
(3) The cocoa substitute includes 0.5 mg/g or more and 3.8 mg/g or less of free amino acids in nonfat solids.
(4) The free amino acids contained in the nonfat solids satisfy all of the following proportions:
   (4-1) a total proportion of isoleucine and leucine is 1 mass% or more and 20 mass% or less in the free amino acids;
   (4-2) a total proportion of glutamine and glutamic acid is 3 mass% or more and 30 mass% or less in the free amino acids; and
   (4-3) a proportion of lysine is 1.5 mass% or more and 10 mass% or less in the free amino acids; and
(5) an oil content is 3 mass% or more and 30 mass% or less.

The above study results also indicate that an oil-based food satisfying the following conditions is suitable.
(A) The oil-based food includes at least one legume as a raw material.
(B) The oil-based food includes a roasted product containing a ground material of the legume.
(C) The oil-based food includes 0.3 mg/g or more and 2.1 mg/g or less of free amino acids in nonfat solids.
(D) The free amino acids contained in the nonfat solids of the oil-based food satisfy all of the following proportions:
   (D-1) a total proportion of isoleucine and leucine is 0.9 mass% or more and 20 mass% or less in the free amino acids;
   (D-2) a total proportion of glutamine and glutamic acid is 3 mass% or more and 35 mass% or less in the free amino acids;
   (D-3) a proportion of lysine is 1.5 mass% or more and 10 mass% or less in the free amino acids; and
   (D-4) a proportion of alanine is 1.6 mass% or more and 10 mass% or less in the free amino acids.

### Industrial Applicability

The present invention can provide a cocoa substitute that can be used as a substitute for components derived from cacao, and provide a novel oil-based food having a good flavor even when the amount of components derived from cacao is reduced.

## Claims

1. A cocoa substitute satisfying all of the following requirements (1) to (5):
(1) the cocoa substitute includes at least one legume as a raw material;
(2) the cocoa substitute is a roasted product containing a ground material of the legume;
(3) the cocoa substitute includes 0.5 mg/g or more and 3.8 mg/g or less of free amino acids in nonfat solids;
(4) the free amino acids contained in the nonfat solids satisfy all of the following proportions:
(4-1) a total proportion of isoleucine and leucine is 1 mass% or more and 20 mass% or less in the free amino acids;
(4-2) a total proportion of glutamine and glutamic acid is 3 mass% or more and 30 mass% or less in the free amino acids; and
(4-3) a proportion of lysine is 1.5 mass% or more and 10 mass% or less in the free amino acids; and
(5) an oil content is 3 mass% or more and 30 mass% or less.

2. The cocoa substitute according to claim 1, wherein the ground material of the legume is a ground material of one or more legumes selected from soybeans, mung beans, fava beans, common beans, peas, scarlet runner beans, adzuki beans, and chickpeas.

3. An oil-based food comprising 5 mass% or more of the cocoa substitute according to claim 1 or 2.

4. An oil-based food satisfying all of the following requirements (A) to (D):
(A) the oil-based food includes at least one legume as a raw material;
(B) the oil-based food includes a roasted product containing a ground material of the legume;
(C) the oil-based food includes 0.3 mg/g or more and 2.1 mg/g or less of free amino acids in nonfat solids; and
(D) the free amino acids contained in the nonfat solids of the oil-based food satisfy all of the following proportions:
(D-1) a total proportion of isoleucine and leucine is 0.9 mass% or more and 20 mass% or less in the free amino acids;
(D-2) a total proportion of glutamine and glutamic acid is 3 mass% or more and 35 mass% or less in the free amino acids;
(D-3) a proportion of lysine is 1.5 mass% or more and 10 mass% or less in the free amino acids; and
(D-4) a proportion of alanine is 1.6 mass% or more and 10 mass% or less in the free amino acids.

5. The oil-based food according to claim 4, wherein the ground material of the legume is a ground material of one or more legumes selected from soybeans, mung beans, fava beans, common beans, peas, scarlet runner beans, adzuki beans, and chickpeas.

6. The oil-based food according to claim 4 or 5, wherein a content of a cacao raw material is 5 mass% or less.

7. A method for producing a cocoa substitute, the method comprising all of the following steps 1 to 3:
step 1: subjecting a ground material of a legume to protease treatment and/or wetting treatment at 20°C or higher;
step 2: mixing the treated product obtained in step 1 with sugar, water, and an oil and/or fat component; and
step 3: roasting the mixture obtained in step 2.

8. A method for producing an oil-based food using the cocoa substitute according to 7, the method further comprising the following step 4:
step 4: mixing and refining the cocoa substitute, sugar, and melted oil and/or fat.
